# EUROPEAN PATENT SPECIFICATION

(11) **EP 2 460 864 B1**
(45) Date of publication and mention of the grant of the patent: **03.07.2013**
(21) Application number: 10015105.9
(22) Date of filing: 29.11.2010
(51) Int. Cl.: C09J 167/00, C08G 63/00, C08G 69/00

(54) **Dienophile-modified fatty acid composition and adhesive**
Dienophilmodifizierte Fettsäurezusammensetzung und Klebstoff
Composition d'acide gras modifiée par diéniphile et adhésif

(43) Date of publication of application: 06.06.2012
(73) Proprietor: NITTO EUROPE N.V, 3600 Genk (BE); Nitto Denko Corporation, Ibaraki-shi Osaka 567-8680 (JP)
(72) Inventor: Vendamme, Richard, 3500 Hasselt (BE); Eevers, Walter, 3520 Zonhoven (BE)
(74) Representative: Grünecker, Kinkeldey, Stockmair & Schwanhäusser

(56) References cited:
- EP-A2- 0 336 296
- DATABASE WPI Week 200829 Thomson Scientific, London, GB; AN 2008-E11729 XP002637425, -& JP 2007 308626 A (NITTO DENKO CORP) 29 November 2007 (2007-11-29)

## Description

The present invention is directed to a composition and adhesive containing a polycondensate and a dienophile-modified fatty acid as a cross-linking agent.

Adhesives are compounds in a liquid or semi-liquid state that can adhere or bond items together. Adhesives are usually derived from fossil fuel, i.e. non-regenerative resources. Because of rising oil prices and environmental concerns, there is an increased demand for bio-based materials. Bio-based materials prepared by the polycondensation of plant-derived dicarboxylic acids and plant-derived diols have been employed in adhesive products because of their good technical properties and their sustainability as a renewable resource. However, in view of practical applications, the visco-elastic properties of these polymers need to be optimized by a cross-linking treatment. This cross-linking step is generally performed by treating the polycondensate with an agent having at least two functional groups capable of reacting with the polycondensate. In this regard, the substitution of standard fossil-based cross-linking agents with bio-based agents is an important aim.

Adhesives usually liberate volatile organic compounds (VOCs). VOCs is the collective name for organic compounds that readily evaporate or exist as gas at low temperatures (e.g. at room temperature). The exposure to VOCs poses a health hazard and may cause environmental damage. Therefore, it is desirable to avoid VOC-emissions.

WO-2004/056901-A1 discloses an adhesive used for wood comprising polyisocyanate and a polyol comprising at least one dimer fatty acid and/or dimer fatty diol.

JP-2008/195819 discloses a polyester-based self-adhesive composition containing a chain-extended polyester that is produced by chain-extending the polyester consisting of a dicarboxylic acid and a diol by an isocyanate compound. The polyester-based self-adhesive can be prepared with a dicarboxylic acid and a diol which are both originated from plants. Among them, the plant-derived dicarboxylic acid may be a dimer acid and the plant-derived diol may be a dimer diol.

Dienophiles, such as maleic acid, are electron-deficient alkenes capable of reacting with multiple bonds in a cycloaddition or a group transfer reaction, such as the ene reaction. Dienophiles are designated as enophiles in ene reactions. EP-1172395 discloses a process for preparing polymerizable coating or moulding compositions by reacting maleinized triglycerides with polyols.

WO-2008/033899 discloses bio-based adhesive compositions comprising a polymer component, which may additionally comprise maleinized soybean oil, and curing components. The curing components are naphthanates, which are typically obtained by oxidizing the naphtha fraction of a crude oil raffination.

The problem underlying the present invention is to provide a bio-based, transparent adhesive composition with good adhesion properties, a high biodegradability and low emission of VOCs.

Said problem is solved by a composition comprising
a) a polycondensate of
   a1) a dimer of a fatty alcohol and/or a dimer of a fatty amine, and
   a2) a dimer of a fatty acid,
   said polycondensate having a weight average molecular weight of from 2,000 to 50,000 g/mol,
   and
b) a fatty acid derivative as a cross-linking agent, wherein said fatty acid derivative is obtainable by reacting
   b1) a fatty acid ester comprising at least two double bonds, and
   b2) a dienophile comprising at least one functional group selected from a carboxylic acid, a carboxylic acid ester and a carboxylic acid anhydride,
   wherein the polycondensate and the cross-linking agent are capable of reacting with each other.

In another embodiment, the present invention is directed to an adhesive obtainable by reacting
a) a polycondensate of
   a1) a dimer of a fatty alcohol and/or a dimer of a fatty amine, and
   a2) a dimer of a fatty acid,
      said polycondensate having a weight average molecular weight of from 2,000 to 50,000 g/mol,
   and
b) a fatty acid derivative as a cross-linking agent, wherein said fatty acid derivative is obtainable by reacting
   b1) a fatty acid ester comprising at least two double bonds, and
   b2) a dienophile comprising at least one functional group selected from a carboxylic acid, a carboxylic acid ester and a carboxylic acid anhydride.

The term "comprising" is an open-ended term. This means that the claim encompasses all the elements listed, but may also include additional, unnamed elements. In a preferred embodiment in combination with any of the above or below embodiments, the term "comprising" means "consisting of", i.e. is a closed-ended term.

In a preferred embodiment in combination with any of the above or below embodiments, the composition or adhesive is bio-based. The term "bio-based" as used herein requires at least 70% of "renewable" carbon according to ASTM 6866-08.

In a preferred embodiment, in combination with any of the above or below embodiments, the fatty alcohol has from 14 to 22 carbon atoms, i.e. 14, 15, 16, 17, 18, 19, 20, 21 or 22 carbon atoms.

The term "dimer of a fatty alcohol", as used herein, refers to the dimerisation product of saturated or mono- or polyunsaturated fatty alcohols.

In another preferred embodiment, in combination with any of the above or below embodiments, the dimer of a fatty alcohol is obtainable by hydrogenation of a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty alcohol are commercially available for example from Croda (trade name PRIPOL 2033) or Cognis (SOVERMOL 908).

Both PRIPOL 2033 and SOVERMOL 908 are high-purity, fully hydrogenated, and distilled aliphatic dimer alcohols. These products appear as colorless, clear viscous liquids. Their properties can be summarized as follows:

| | |
|---|---|
| • Color (Gardner /DIN ISO 4630) | < 1 |
| • OH Value (DIN 53240) | 200 - 212 mg KOH/g |
| • Acid Value (ISO 660) | <= 0.2 mg KOH/g |
| • Water Content (ISO 2464) | <= 0.2 % |
| • Viscosity at 25°C (ISO 2555) | 1800 - 2800 mPa/s |
| • Functionality | 2 |

In a preferred embodiment in combination with any of the above or below embodiments, the dimer of a fatty alcohol is present in the polycondensate a) in a concentration of 0 mol% to 80 mol%, preferably in a concentration of 10 mol% to 70 mol%, more preferably in a concentration of 20 mol% to 60 mol%.

In a preferred embodiment in combination with any of the above or below embodiments, the fatty amine has from 14 to 22 carbon atoms, i.e. 14, 15, 16, 17, 18, 19, 20, 21 or 22 carbon atoms.

The term "dimer of a fatty amine", as used herein, refers to the dimerisation product of a mono- or polyunsaturated fatty amine.

In another preferred embodiment, in combination with any of the above or below embodiments, the dimer of a fatty amine is obtainable from a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty amine are commercially available for example from Croda (trade name PRIPOL 1074). PRIPOL 1074 is a high-purity, fully hydrogenated, and distilled aliphatic dimer amine. These products appear as light colored, clear liquids.

In a preferred embodiment in combination with any of the above or below embodiments, the dimer of a fatty amine is present in the polycondensate a) in a concentration of 0 mol% to 80 mol%, preferably in a concentration of 10 mol% to 70 mol%, more preferably in a concentration of 20 mol% to 60 mol%.

In another preferred embodiment, in combination with any of the above or below embodiments, component a1) is present in the polycondensate a) in a concentration of 45 mol% to 70 mol%, preferably in a concentration of 50 mol% to 60 mol%.

In a preferred embodiment, in combination with any of the above or below embodiments, the fatty acid has from 14 to 22 carbon atoms, i.e. 14, 15, 16, 17, 18, 19, 20, 21 or 22 carbon atoms

The term "dimer of a fatty acid", as used herein, refers to the dimerisation product of mono- or polyunsaturated fatty acids and/or esters thereof.

In another preferred embodiment, in combination with any of the above or below embodiments, the fatty acid is selected from the group consisting of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty acid are commercially available. For example, dimers of oleic acid or linoleic acid are available from Croda (Gouda, The Netherlands) under the trade name PRIPOL 1009, or Cognis (Düsseldorf, Germany) under the trade names EMPOL 1008 or EMPOL 1016.

PRIPOL 1009 and EMPOL 1008 are high-purity, fully hydrogenated, and distilled aliphatic dimer acids. These products appear as colorless to light colored, clear viscous liquids. Their properties can be summarized as follows:

| | |
|---|---|
| Color (Gardner / DIN ISO 4630) | < 1 |
| Acid Value (ISO 660) | 195 mg KOH/g |
| Monobasic acids (HPLC %) | max 2 % |
| Dibasic Acids (HPLC %) | min 95 % |
| Polybasic Acids (HPLC %) | 1 to 5 % |
| Viscosity at 25°C, poise (ASTM 2196) | 40-70 |

In a preferred embodiment in combination with any of the above or below embodiments, the dimer of a fatty acid is present in the polycondensate a) in a concentration of 10 mol% to 70 mol%, preferably in a concentration of 20 mol% to 60 mol%, more preferably in a concentration of 30 mol% to 50 mol%.

In a preferred embodiment, in combination with any of the above or below embodiments, component a2) is present in the polycondensate a) in a concentration of 30 mol% to 55 mol%, preferably in a concentration of 40 mol% to 50 mol%.

In another preferred embodiment, in combination with any of the above or below embodiments, component a) has a glass transition temperature (Tg) of from -50°C to 0°C, preferably from -10°C to -40°C.

As used herein, the Tg is determined using Differential Scanning Calorimetry. For the DSC analysis, the samples were first cooled to -100°C and then heated up to 50°C (heating ramp + 10°C/min) in a nitrogen atmosphere.

In a preferred embodiment, in combination with any of the above or below embodiments, component a) is present in a concentration of 40 wt% to 95 wt%, preferably in a concentration of 50 wt% to 90 wt%, based on the composition or adhesive.

In a preferred embodiment, in combination with any of the above or below embodiments, component a) is a polycondensate of a1) a dimer of a fatty alcohol and a2) a dimer of a fatty acid.

In another preferred embodiment, in combination with any of the above or below embodiments, component a) is a polycondensate of a1) a dimer of a fatty alcohol and a dimer of a fatty amine, and a2) a dimer of a fatty acid.

In another preferred embodiment, in combination with any of the above or below embodiments, component a) is a polycondensate of a1) a dimer of a fatty amine and a2) a dimer of a fatty acid.

In a preferred embodiment, in combination with any of the above or below embodiments, component a) is a polycondensate of component a1) and component a2), wherein the molar ratio of a1) to a2) is >1, preferably from 1.1 to 3:1, more preferably from 1.15 to 2:1, and in particular from 1.05 to 1.5:1.

In a preferred embodiment, in combination with any of the above or below embodiments, the polycondensate has a weight average molecular weight of from 2,000 to 50,000 g/mol, more preferably from 5,000 to 30,000 g/mol.

As used herein, the average molecular weights of the polymers were determined by gel permeation chromatography (GPC) instrument (Waters Model Pump 515 and Waters 2414 refractive index detector) with styragel columns relative to polystyrene (PS) standards using tetrahydrofuran (THF) as eluent.

In a preferred embodiment in combination with any of the above or below embodiments, a1) further contains a diol monomer.

The term "diol monomer" as used herein refers to a saturated, unsaturated or aromatic diol which is linear, branched or cyclic. In a preferred embodiment in combination with any of the above or below embodiments, the diol monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diol monomer is derived from renewable sources, in particular, selected from the group consisting of 1,3-propanediol, 1,4-butanediol, isosorbide or bishydroxymethyl furfural.

In a preferred embodiment in combination with any of the above or below embodiments, the diol monomer is present in the polycondensate a) in a concentration of 0 mol% to 50 mol%, preferably in a concentration of 5 mol% to 40 mol%, more preferably in a concentration of 10 mol% to 30 mol%.

In a preferred embodiment in combination with any of the above or below embodiments, a1) further contains glycerol. In a preferred embodiment in combination with any of the above or below embodiments, glycerol is present in the polycondensate a) in a concentration of 0 mol% to 20 mol%, preferably in a concentration of 1 mol% to 15 mol%, more preferably in a concentration of 2 mol% to 10 mol%. Glycerol is one of the main components of natural oils and may serve as a branching agent in the present invention.

The use of glycerol allows the enhancement of the functionality of the polymer and the facilitation of the subsequent cross-linking process.

In a preferred embodiment in combination with any of the above or below embodiments, a1) further contains a diamine monomer.

The term "diamine monomer" as used herein refers to an saturated, unsaturated or aromatic diamine which is linear, branched or cyclic. In a preferred embodiment in combination with any of the above or below embodiments, the diamine monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diamine monomer is selected from the group consisting of 1,4-diaminobutane or 1,5-diaminopentane.

In a preferred embodiment in combination with any of the above or below embodiments, the diamine monomer is present in the polycondensate a) in a concentration of 0 mol% to 50 mol%, preferably in a concentration of 5 mol% to 40 mol%, more preferably in a concentration of 10 mol% to 30 mol%.

In a preferred embodiment in combination with any of the above or below embodiments, a2) further contains a diacid monomer.

The term "diacid monomer" as used herein refers to a saturated, unsaturated or aromatic dicarboxylic acid which is linear, branched or cyclic. In a preferred embodiment in combination with any of the above or below embodiments, the diacid monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms.

In another preferred embodiment in combination with any of the above or below embodiments, the diacid monomer is derived from renewable sources, in particular selected from the group consisting of succinic acid, sebacic acid, azelaic acid and 2,5-furandicarboxylic acid. For instance, succinic acid is produced by fermentation of sugars, and azelaic acid is obtained industrially by ozonolysis of oleic acid. Renewable azelaic acid is commercially available from Cognis (Düsseldorf, Germany) under the trade names Emerox 1110 or Emerox 1144.

In a preferred embodiment in combination with any of the above or below embodiments, the diacid monomer is present in the polycondensate a) in a concentration of 0 mol% to 50 mol%, preferably in a concentration of 5 mol% to 40 mol%, more preferably in a concentration of 10 mol% to 30 mol%.

In a preferred embodiment in combination with any of the above or below embodiments, a2) further contains a trimer of a fatty acid.

The use of a trimer of a fatty acid allows the enhancement of the functionality of the polymer and the facilitation of the subsequent cross-linking process.

The term "trimer of a fatty acid" as used herein refers to the trimerisation product of mono- or polyunsaturated fatty acids and/or esters thereof.

Trimers of a fatty acid are obtainable as by-products during the dimerisation of fatty acids, for example, oleic acid or linoleic acid, and can be isolated by distillation. Such trimer acids are commercially available, for example, from Croda under the trade name PRIPOL 1006 (mixture: 95 wt% dimer acid / 5 wt% trimer acid), PRIPOL 1025 (mixture: 80 wt% dimer acid / 20 wt% trimer acid) or PRIPOL 1040 (mixture: 25 wt% dimer acid / 75 wt% trimer acid), and from Cognis (EMPOL 1045 or EMPOL 1043).

PRIPOL 1040 and EMPOL 1045 are fully hydrogenated trimer acids with a polybasic acid content of typically more than 70%, and are useful in applications where branching is desired. Their properties can be summarized as follows:

| | |
|---|---|
| Acid Value (ISO 660) | 180 - 200 mg KOH/g |
| Monobasic acids (HPLC %) | max 5% |
| Dibasic Acids (HPLC %) | 0-40% |
| Polybasic Acids (HPLC %) | 60-90% |
| Viscosity at 25°C, poise (ASTM 2196) | 200-500 |

In a preferred embodiment in combination with any of the above or below embodiments, the trimer of a fatty acid is present in the polycondensate a) in a concentration of 0 mol% to 20 mol%, preferably in a concentration of 1 mol% to 15 mol%, more preferably in a concentration of 2 mol% to 10 mol%.

In a preferred embodiment, in combination with any of the above or below embodiments, the fatty acid ester is a triglyceride or an alkyl ester of a fatty acid containing from 15 to 46 carbon atoms, more preferably the fatty acid ester is a triglyceride or an alkyl ester of a fatty acid containing from 14 to 22 carbon atoms, i.e. 14, 15, 16, 17, 18, 19, 20, 21 or 22 carbon atoms, in the fatty acid moiety, and from 1 to 24 carbon atoms, i.e. 1, 2, 3, 4, 5, 6, 7, 8, 9, 10, 11, 12, 13, 14, 15, 16, 17, 18, 19, 20, 21, 22, 23 or 24 carbon atoms, in the alkyl group.

In a preferred embodiment, in combination with any of the above or below embodiments, the fatty acid ester is a triglyceride or a linoleic, linolenic, stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic alkyl ester, wherein the alkyl contains from 1 to 24 carbon atoms, and/or mixtures thereof.

In a preferred embodiment, in combination with any of the above or below embodiments, the fatty acid ester is a linoleic, linolenic, stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic alkyl ester, wherein the alkyl contains from 1 to 24 carbon atoms and/or mixtures thereof.

In another preferred embodiment, in combination with any of the above or below embodiments, the fatty acid ester is a triglyceride.

In a preferred embodiment, in combination with any of the above or below embodiments, the triglyceride is a natural oil selected from the group consisting of soybean oil, linseed oil, tung oil, castor oil, palm kernel oil, sunflower oil, corn oil, cottonseed oil, perilla oil, rapeseed oil, olive oil, canola oil, palm oil, coconut oil, rice bran oil, safflower oil, sesame oil, tall oil, and/or mixtures thereof.

Fatty acid esters and triglycerides are commercially available. For example linseed oil is available from Canrex Seed Oil Copr. (Richmond Hill, Ontario).

In a preferred embodiment, in combination with any of the above or below embodiments, the dienophile is an electron-deficient (electrophilic) alkene, which is substituted with one or more electron-withdrawing functional group. Preferably, the alkene contains from 3 to 8 carbon atoms. Preferably, the electron-withdrawing group is selected from the group consisting of carboxylic acids, esters of carboxylic acids, anhydrides, ethers, aldehydes and ketones.

The term "dienophile", as used herein, refers to an electron-deficient alkene which is capable of reacting with multiple bonds in a cycloaddition or group transfer reaction, such as the ene reaction.

In another preferred embodiment, in combination with any of the above or below embodiments, the dienophile is selected from the group consisting of maleic acid, maleic anhydride, fumaric anhydride, itaconic acid and itaconic anhydride. The most preferred of this group is maleic anhydride.

Dienophiles are commercially available. For example, maleic anhydride is available from BASF (Ludwigshafen, Germany).

Dienophile-modified fatty acids and triglycerides are also commercially available. For example, maleinized linseed oil and maleinized soybean oil are commercially available from the company Vandeputte Oleochemicals (Mouscron, Belgium) under the tradenames VEOMER 252015 and VEOMER 255010, respectively.

In a preferred embodiment in combination with any of the above or below embodiments, the fatty acid ester b1) is present in component b) in a concentration of 50 wt% to 98 wt%, preferably in a concentration of 60 wt% to 95 wt%, more preferably in a concentration of 70 wt% to 92 wt%.

In a preferred embodiment in combination with any of the above or below embodiments, the dienophile b2) is present in component b) in a concentration of 2 wt% to 50 wt%, preferably in a concentration of 5 wt% to 40 wt%, more preferably in a concentration of 8 wt% to 30 wt%.

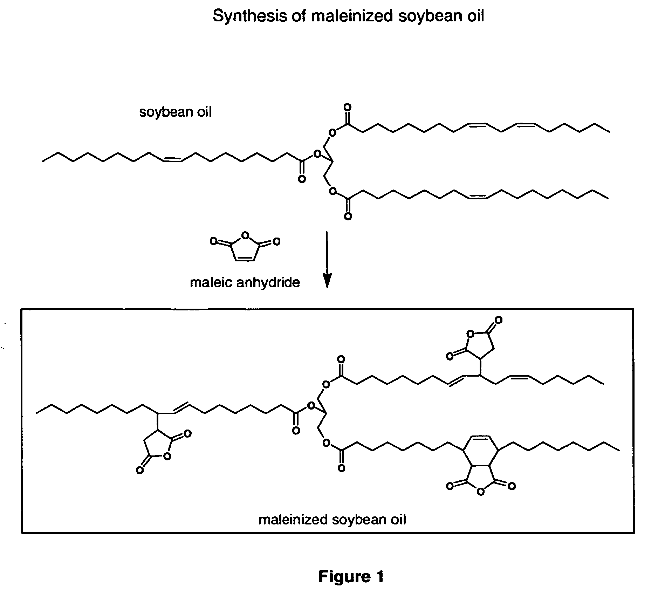

Figure 1 shows the synthesis of maleinized soybean oil as an example for a cross-linking agent.

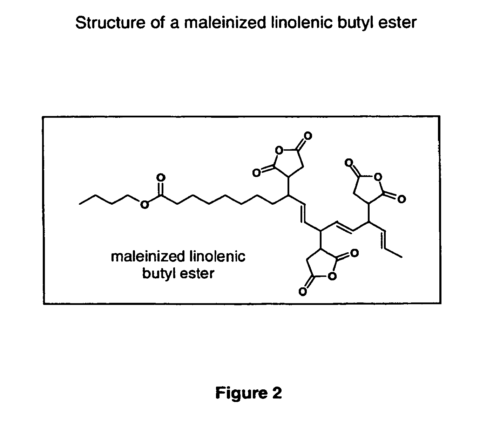

Figure 2 shows the structure of maleinized linolenic butyl ester as cross-linking agent.

In another preferred embodiment, in combination with any of the above or below embodiments, component b) is present in a concentration of 5 wt% to 60 wt%, preferably in a concentration of 10 wt% to 50 wt%, based on the composition or adhesive. These ranges allow for the preparation of adhesive compositions with adhesion strength such as from 20 cN/20mm to 2000 cN/20mm.

In another preferred embodiment, in combination with any of the above or below embodiments, the adhesive has a Tg of from -50°C to 0°C, preferably from -10°C to -40°C.

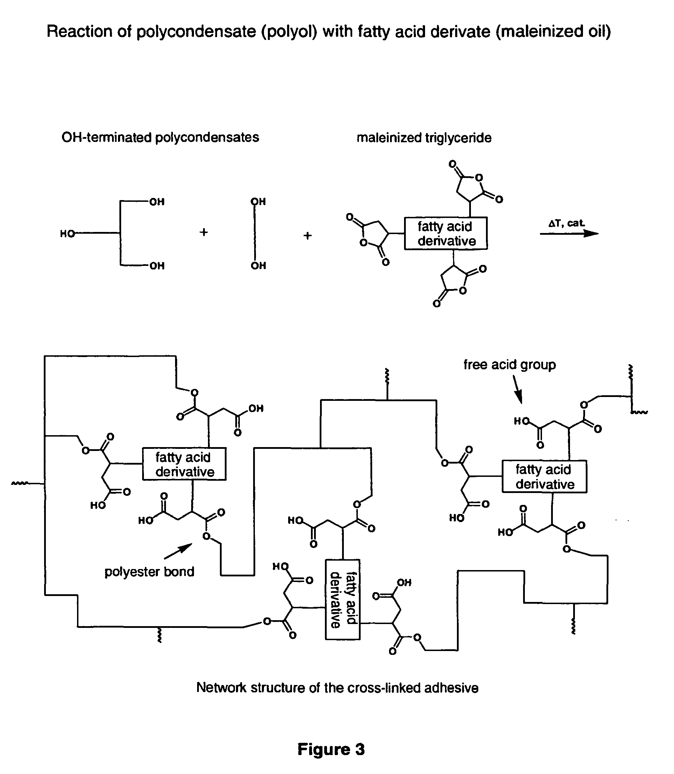

Figure 3 shows the reaction of a polycondensate (polyol) with a fatty acid derivative (maleinized oil) to form a bio-based adhesive.

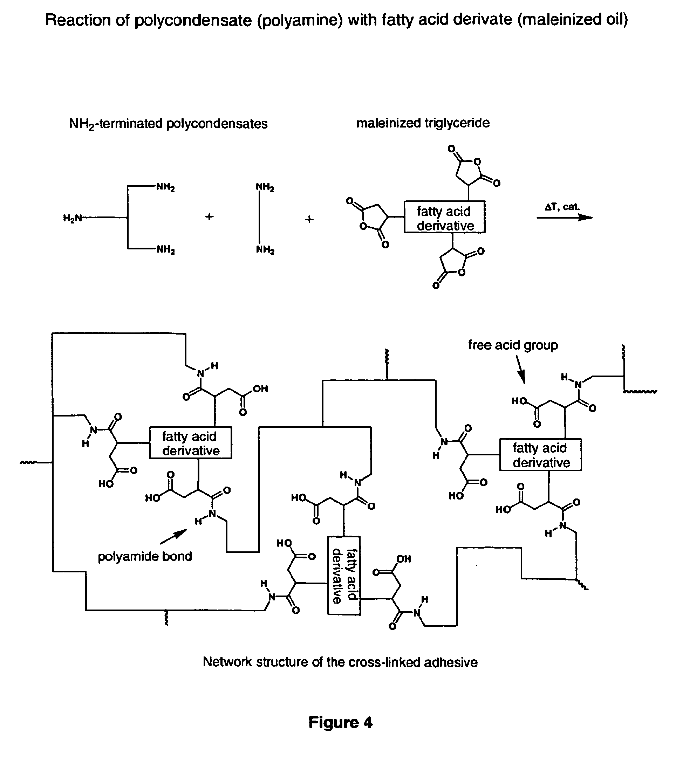

Figure 4 shows the reaction of an amino-functional polycondensate with a fatty acid derivative (maleinized oil) to form a bio-based adhesive.

The adhesive has good adhesion and cohesion abilities as well as is highly biodegradable. The polycondensate and the cross-linking agent can be derived from the same renewable source (natural oils) and can be made of the same chemical building blocks (fatty acids), thus rendering the adhesive bio-based.

The polycondensate and the cross-linking agent are highly miscible in a wide range of concentrations and temperatures. This high miscibility usually prevents the composition from phase separating during the curing reaction. The adhesive shows a high level of transparency irrespective of whether or not a phase separation occurs during the curing reaction because the refractive indexes of the polycondensate and the cross-linking agent are very similar.

Component a), including components a1) and a2), and component b) have a very low volatility and will, therefore, not contribute to VOC emissions. In addition, the adhesive composition can be coated without a solvent (solid content = 100%) and, therefore, does not necessarily require an organic solvent that will contribute to VOC emissions.

The adhesive (or adhesion) strength can be measured by a 180°C peel test. This type of testing determines the force that is necessary to tear a strip of tape from a standard surface at a constant speed. The result is the force referred to the width of the tape. Samples for the peel test were prepared as follows. At first, the biobased adhesive composition is coated on a carrier film (for instance PET) and cured as described in Examples 10 to 14. Then, 2 cm wide, 10 cm long pieces of adhesive tapes are cut and placed on a table (the adhesive face on top). Half of the tape length is then covered with a second strip of plastic film (this film should be identical to the carrier film on which the adhesive composition has been previously coated). Then, this assembly is turned upside down and the free adhesive domain is applied manually on the reference surface (for instance AB steel). A 2 kg cylinder is rolled twice on the tape in order to ensure good contact between the adhesive and the reference surface. A dwell time of 15 minutes is observed prior to performing the peeling test. The peel test is performed with a Zwick Z005 testing machine at a constant peeling speed of 300 mm/min.

The adhesive characteristics of the inventive composition or adhesive can be fine-tuned by varying the concentration of the cross-linking agent. Thus, the composition or adhesive is suitable for a wide range of potential applications. For instance, the adhesion force on steel can be in the range of from 20 to 2000 cN/20mm. The adhesion force can be adjusted to be moderate, preferably below 100 cN/20mm for temporal surface protection, or the adhesion force can be adjusted to be high, preferably from 500 to 2,000 cN/20mm, for permanent bonding and joining applications.

In another preferred embodiment, in combination with any of the above or below embodiments, the polycondensate has a number of free carboxylic acid groups in the range of 0 to 5 mg KOH/g and a number of free hydroxyl groups in the range of 5 to 50 mg KOH/g. The acid value is defined as the number of mg of potassium hydroxide required to neutralize the free fatty acids in 1 g of sample, and was measured by direct titration with a standard potassium hydroxide solution. The hydroxyl value is defined as the number of mg of potassium hydroxide equivalent to the hydroxyl content of 1 g of sample, and is measured by acetylation followed by hydrolysation of excess acetic anhydride. The acetic acid formed is subsequently titrated with an ethanolic potassium hydroxide solution.

In another embodiment, the invention is directed to a method for preparing the adhesive, comprising reacting
a) a polycondensate of
   a1) a dimer of a fatty alcohol and/or a dimer of a fatty amine, and
   a2) a dimer of a fatty acid,
   said polycondensate having a weight average molecular weight of from 2,000 to 50,000 g/mol,
   and
b) a fatty acid derivative as a cross-linking agent, wherein said fatty acid derivative is obtainable by reacting
   b1) a fatty acid ester comprising at least two double bonds, and
   b2) a dienophile comprising at least one functional group selected from a carboxylic acid, a carboxylic acid ester and a carboxylic acid anhydride.

In another preferred embodiment, in combination with any of the above or below embodiments, the polycondensate is obtainable by reacting components a1) and a2) at 160°C to 250°C, more preferably at 170°C to 190°C, in particular at about 180°C.

In a preferred embodiment, in combination with any of the above or below embodiments, the reaction is performed without a solvent, in particular, if the viscosity of the polyester remains low, i.e. if the molecular weight of the polycondensate remains low (typically lower than 30,000 g/mol weight average molecular weight). The advantage of performing the reaction without solvent, i.e. in bulk, is that the carbon footprint and the VOC emissions of the inventive composition or adhesive can be further lowered.

In a preferred embodiment in combination with any of the above or below embodiments, a vacuum is applied during the polycondensation reaction in order to promote the extraction of water and to speed up the reaction. The vacuum pressure is preferably in a range of 0.1 mbar to 25 mbar, more preferably 1 mbar to 5 mbar, in particular about 1.5 mbar.

In a preferred embodiment in combination with any of the above or below embodiments, the polycondensation reaction is conducted in the presence of a polymerisation catalyst. Catalysts that may be used for the polycondensation process are well known in the art.

In another preferred embodiment in combination with any of the above or below embodiments, the esterification catalyst is selected from the group consisting of salts and oxides of Li, Ca, Mg, Mn, Zn, Pb, Sb, Sn, Ge, and Ti, and their glycol adducts, more preferably acetate salts of Li, Ca, Mg, Mn, Zn, Pb, Sb, Sn, Ge, and Ti, and Ti alkoxides, even more preferably titanium(IV) n-butoxide, tin(II) octoate, butyl tin chloride dihydroxide, manganese acetate, or zinc acetate, in particular titanium(IV) n-butoxide.

In a preferred embodiment in combination with any of the above or below embodiments, the catalyst is added at the beginning of the reaction. In another preferred embodiment in combination with any of the above or below embodiments, the catalyst is added one or more times to the reaction mixture during the reaction period.

In a preferred embodiment in combination with any of the above or below embodiments, the polymerisation catalyst is used in a concentration of 0.001 to 2 wt%, more preferably 0.005 to 0.5 wt%, in particular about 0.01 wt%.

The same preferred reaction conditions are applicable for the polycondensation reaction if a1) further contains a diol monomer, glycerol and/or a diamine monomer, and/or a2) further contains a diacid monomer and/or a trimer of a fatty acid.

In another preferred embodiment, in combination with any of the above or below embodiments, the method for preparing the adhesive comprises reacting the polycondensate and the cross-linking agent in a solvent, more preferably in an organic solvent, even more preferably in an aromatic hydrocarbon, in particular in toluene, xylene or ethylacetate.

In another preferred embodiment, in combination with any of the above or below embodiments, the method for preparing the adhesive comprises reacting the polycondensate and the cross-linking agent in a solvent, wherein the concentration of polycondensate and the cross-linking agent is 20 to 99 wt%.

In another preferred embodiment, in combination with any of the above or below embodiments, the method for preparing the adhesive comprises reacting the polycondensate and the cross-linking agent without using a solvent.

In another preferred embodiment, in combination with any of the above or below embodiments, a catalyst is used in the reaction between the polycondensate and the anhydride-functional cross-linking agent.

In a preferred embodiment in combination with any of the above or below embodiments, the catalyst is a tertiary amine. In another preferred embodiment in combination with any of the above or below embodiments, the amine is selected from the group consisting of 2-methylimidazole, trimethylamine, triethylamine, tetramethyl butane diamine, bis-(dimethylaminoethyl)-ether, 1,4-diazabicyclooctane (DABCO), 2,2'-dimorpholino-diethyl ether, dimethyl piperazine, and mixtures thereof, in particular the amine is 2-methylimidazole.

In a preferred embodiment in combination with any of the above or below embodiments, the catalyst is an amidine, more preferably the amidine is selected from the group consisting of 1,8-diazabicyclo-(5.4.0)-undecane, 1,5-diazabicyclo[4.3.0]non-5-ene (DBN), 1,8-diazabicyclo[5.4.0]-undec-7-ene (DBU), in particular 1,8-diazabicyclo[5.4.0]-undec-7-ene (DBU).

In another preferred embodiment, in combination with any of the above or below embodiments, the method for preparing the adhesive comprises reacting the polycondensate and the cross-linking agent in a solvent, and using said reaction mixture as a coating solution. In another preferred embodiment, in combination with any of the above or below embodiments, said coating solution is laminated on a sheet or a film.

In another embodiment, the invention is directed to the use of the adhesive for laminating a sheet or a film. The sheet or film is preferably fossil-based or bio-based. It is possible to obtain a fully bio-based tape structure by laminating a bio-based adhesive composition onto a bio-based carrier film.

In a preferred embodiment in combination with any of the above or below embodiments, the composition or adhesive comprises a tackifying resin, more preferably selected from the group consisting of abietic acid, an abietic acid ester, a terpene resin, a terpene/phenol resin and a hydrocarbon resin.

In a preferred embodiment in combination with any of the above or below embodiments, the composition or adhesive comprises a filler, more preferably selected from the group consisting of a silicate, talcum, calcium carbonate, clay and carbon black.

In a preferred embodiment in combination with any of the above or below embodiments, the composition or adhesive comprises a plasticizer, more preferably selected from the group consisting of a phthalate and a thixotropicizing agent. The thixotropicizing agent is preferably selected from the group consisting of bentone, pyrogenic silicas, urea derivatives, fibrillated or pulp chopped fibers. Preferably, the pulp chopped fibers are selected from the group consisting of kenaf, hemp, flax, jute, sisal, cotton and linen.

In a preferred embodiment in combination with any of the above or below embodiments, the composition or adhesive comprises a pigment. In another preferred embodiment in combination with any of the above or below embodiments, the composition or adhesive comprises a pigment paste.

The fossil-based plastic sheet or film is preferably made from poly(ethylene terephthalate) (PET), polyethylene (PE), polyvinyl chloride (PVC) and/or polypropylene (PP). The bioplastic sheet or film is preferably made from cellulose, starch and/or polylactic acid (PLA).

In another preferred embodiment, in combination with any of the above or below embodiments, the sheet or film is made from poly(ethylene terephthalate), polyethylene, polypropylene, cellulose, starch and/or polylactic acid.

Cellulose-based films are commercially available, for example, from Innovia Films under the trade name NatureFlex. Polylactic acid-based films are commercially available, for example, from Nordenia Technologies. Preferably, a modified-PLA film with enhanced temperature resistance is used.

The adhesive of the present invention shows a high level of transparency, high miscibility, low VOC emissions and a low carbon footprint.

In addition, the adhesive of the present invention shows very good adhesive properties. The adhesive properties can be fine tuned by varying the concentration of free carboxylic acid groups. These free carboxylic acid groups stem from component b) (i.e. the crosslinking agent) and their concentration can be adjusted by selecting an appropriate concentration of component b).

The following examples further describe the invention.

### EXAMPLES

### Example 1: Synthesis of a linear, hydroxyl-functional bio-based polyester containing a dimer of a fatty acid and a dimer of a fatty alcohol

A typical polymerisation was carried out according to the following procedure. PRIPOL 1009 (153.45 g, 265.1 mmol) and PRIPOL 2033 (171.55 g, 298.96 mmol) were weighed into a 1 I reactor vessel. The reactor was fitted with an Allihn reflux condenser and a Dean-Stark type condenser to collect the water created by the polycondensation reaction. During the first part of the experiment, the set-up was continuously flushed with inert gas (nitrogen) to limit oxidation and facilitate transport of water vapour. While stirring, the mixture was heated from room temperature to 190°C using a heating mantle and a U-shaped mechanical stirrer.

After 4 hours, the catalyst titanium tetrabutoxide was introduced in the reaction mixture (0.01 wt%). Subsequently, vacuum processing was applied (with typical pressure ranging from 1 - 5 mbar), and the reaction temperature was increased to 250°C. After 5 hours, the polymer was discharged from the reactor and left to cool. The resulting polyester had a glass transition temperature (Tg) of -49.4°C, a weight average molecular weight (Mw) of 19,361 g/mol, an acid value of 0.06 mg KOH/g and a hydroxyl value of 15.33 mg KOH/g.

### Example 2: Synthesis of a linear, hydroxyl-functional bio-based polyester containing a dimer of a fatty acid and a dimer of a fatty alcohol

PRIPOL 1009 (140.45 g, 242.6 mmol) and PRIPOL 2033 (184.55 g, 321.61 mmol) were weighed into a 1 I reactor vessel. The reaction was carried out following the procedure reported in Example 1. The resulting polyester had a weight average molecular weight (Mw) of 10,872 g/mol, an acid value of 0.01 mgKOH/g and a hydroxyl value of 31.66 mgKOH/g.

### Example 3: Synthesis of a linear, hydroxyl-functional bio-based polyester containing a dimer of a fatty acid, a dimer of a fatty alcohol, and isosorbide.

PRIPOL 1009 (160.89 g, 277.9 mmol), PRIPOL 2033 (148.02 g, 257.95 mmol) and isosorbide (16.09 g, 110.09 mmol) were weighed into a 1 I reactor vessel. The reaction was carried out following the procedure reported in Example 1. The resulting polyester had a weight average molecular weight (Mw) of 18,250 g/mol, an acid value of 6 mgKOH/g and a hydroxyl value of 55 mgKOH/g.

### Example 4: Synthesis of a linear, hydroxyl-functional bio-based polyester containing a dimer of a fatty acid, succinic acid and a dimer of a fatty alcohol

PRIPOL 1009 (122.64 g, 211.9 mmol), succinic acid (12.26 g, 103.85 mmol), and PRIPOL 2033 (177.83 g, 309.90 mmol) were weighed into a 1 I reactor vessel. The reaction was carried out following the procedure reported in Example 1. The resulting polyester had a weight average molecular weight (Mw) of 20,780 g/mol.

### Example 5: Synthesis of a branched, hydroxyl-functional bio-based polyester containing a dimer of a fatty acid, a trimer of a fatty acid and a dimer of a fatty alcohol

PRIPOL 1009 (116.64 g, 201.5 mmol), PRIPOL 1040 (23.81 g, 31.05 mmol) and PRIPOL 2033 (184.55 g, 321.62 mmol) were weighed into a 1 I reactor vessel. The reaction was carried out following the procedure reported in Example 1. The resulting polyester had a weight average molecular weight (Mw) of 17,564 g/mol, an acid value of 0.01 mgKOH/g and a hydroxyl value of 39.95 mgKOH/g.

### Example 6: Synthesis of a branched, hydroxyl-functional bio-based polyester containing a dimer of a fatty acid, a trimer of a fatty acid and a dimer of a fatty alcohol

PRIPOL 1009 (85.52 g, 147.7.mmol), PRIPOL 1040 (54.94 g, 71.67 mmol) and PRIPOL 2033 (184.54 g, 321.60 mmol) were weighed into a 1 I reactor vessel. The reaction was carried out following the procedure reported in Example 1. The resulting polyester had a weight average molecular weight (Mw) of 29,314 g/mol, an acid value of 0.01 mgKOH/g and a hydroxyl value of 39.95 mgKOH/g.

### Example 7: Synthesis of a bio-based poly(ester amide) containing a dimer of a fatty acid, a dimer of a fatty amine and a dimer of a fatty alcohol

PRIPOL 1009 (140.45 g), PRIPOL 2033 (92.275 g) and PRIPOL 1074 (92.275 g) were weighed into a 1 I reactor vessel. The reaction was carried out following the procedure reported in Example 1. The resulting polyester had a weight average molecular weight (Mw) of 11.450 g/mol.

### Example 8: Synthesis of a bio-based polyamide containing a dimer of a fatty acid and a dimer of a fatty amine

PRIPOL 1009 (133.94 g, 231.4 mmol) and PRIPOL 1074 (191.06 g, 332.96 mmol) were weighed into a 1 I reactor vessel. The reaction was carried out following the procedure reported in Example 1. The resulting polyester had a weight average molecular weight (Mw) of 22,900 g/mol.

### Example 9: Synthesis of maleinized soybean oil

Soybean oil (100 g, 115 mmol) was placed in a flask under N₂ fitted with a condenser, magnetic stirrer, and thermometer. Maleic anhydride (9 g, 91 mmol) was added and the mixture was heated to 180°C. The color of solution changed from yellow to orange. After 1 h, a second portion of maleic anhydride (9 g, 91 mmol) was added and the temperature was increased to 195-200°C. Some sublimation of maleic anhydride was observed. After 1 h, the final portion of maleic anhydride (9 g, 91 mmol) was added and the temperature was increased to 220-230°C. The mixture was stirred for 1 h at 220°C and then cooled to room temperature. The solution became reddish and the viscosity increased.

### Example 10: Pressure sensitive adhesive composition containing a linear polyester cross-linked with maleinized linseed oil

11.00 g of **Polymer 2** (synthesized in Example 2) were mixed with 8.80 g of maleinated linseed oil (commercial name VEOMER 252013 from Vandeputte Oleochemicals), 150 mg of 1,8-diazabicyclo[5.4.0]-undec-7-ene, and 8.5 g of toluene. Once the solution had been homogenised, a 40 µm adhesive layer was roll-coated manually at room temperature with an approximative speed of 50 cm/s on a 50 µm thick polyethylene terephtalate (PET) film, and this bilayer stack was dried and cured in an oven at 130°C for 15 minutes.

This resulted in a very tacky film suitable for pressure sensitive adhesive (PSA) applications. The adhesive strength, as measured by a 180° peel test to panels after double rolling of a two kg cylinder on the tape and a subsequent dwell time of 15 minutes, was 545 cN/20mm from BA Steel and 271 cN/20mm from polypropylene (PP).

### Example 11: Pressure sensitive adhesive composition containing a branched polyester cross-linked with maleinized soybean oil

11.00 g of Polymer 5 (synthesized in Example 5) were mixed with 8.80 g of maleinated soybean oil (commercial name VEOMER 255010 from Vandeputte Oleochemicals), 150 mg of 1,8-diazabicyclo[5.4.0]-undec-7-ene, and 8.5 g of toluene. Once the solution had been homogenised, a 40 µm adhesive layer was roll-coated manually at room temperature with an approximative speed of 50 cm/s on a 50 µm thick polyethylene terephtalate (PET) film, and this bilayer stack was dried and cured in an oven at 150°C for 10 minutes.

This resulted in a tacky film suitable for pressure sensitive adhesive (PSA) applications. The adhesive strength, as measured by a 180° peel test to panels after double rolling of a two kg cylinder on the tape and a subsequent dwell time of 15 minutes, was 100 cN/20mm from BA Steel and 91 cN/20mm from polypropylene (PP).

### Example 12: Pressure sensitive adhesive composition containing a linear polyester cross-linked with maleinized soybean oil

15.84 g of **Polymer 1** (synthesized in Example 1) were mixed with 3.96 g of maleinated soybean oil (synthesised in example 9), 150 mg of 1,8-diazabicyclo[5.4.0]-undec-7-ene, and 8.5 g of toluene. Once the solution had been homogenised, a 40 µm adhesive layer was roll-coated manually at room temperature with an approximative speed of 50 cm/s on a 50 µm thick polyethylene terephtalate (PET) film, and this bilayer stack was dried and cured in an oven at 130°C for 20 minutes.

This resulted in a very tacky film suitable for pressure sensitive adhesive (PSA) applications. The adhesive strength, as measured by a 180° peel test to panels after double rolling of a two kg cylinder on the tape and a subsequent dwell time of 15 minutes, was 561 cN/20mm from BA Steel and 290 cN/20mm from polypropylene (PP).

### Example 13: Pressure sensitive adhesive composition from a branched polyester cross-linked with maleinized soybean oil

15.23 g of **Polymer 6** (synthesized in Example 6) were mixed with 4.57 g of maleinated soybean oil (synthesised in example 9), 150 mg of 1,8-diazabicyclo[5.4.0]-undec-7-ene, and 8.5 g of ethyl acetate. Once the solution had been homogenised, a 40 µm adhesive layer was roll-coated manually at room temperature with an approximative speed of 50 cm/s on a 50 µm thick polyethylene terephtalate (PET) film, and this bilayer stack was dried and cured in an oven at 130°C for 20 minutes.

This resulted in a tacky film suitable for pressure sensitive adhesive (PSA) applications. The adhesive strength, as measured by a 180° peel test to panels after double rolling of a two kg cylinder on the tape and a subsequent dwell time of 15 minutes, was 60 cN/20mm from BA Steel and 39 cN/20mm from polypropylene (PP).

### Example 14: Pressure sensitive adhesive composition from a linear polyamide cross-linked with maleinized linseed oil

20.00 g of **Polymer 8** (synthesized in Example 8) were mixed with 4 g of maleinated linseed oil (commercial name VEOMER 252013 from Vandeputte Oleochemicals) and 12 g of toluene. Once the solution had been homogenised, a 40 µm adhesive layer was roll-coated manually at room temperature with an approximative speed of 50 cm/s on a 50 µm thick polyethylene terephtalate (PET) film, and this bilayer stack was dried and cured in an oven at 130°C for 15 minutes.

This resulted in a tacky film suitable for pressure sensitive adhesive (PSA) applications. The adhesive strength, as measured by a 180° peel test to panels after double rolling of a two kg cylinder on the tape and a subsequent dwell time of 15 minutes, was 983 cN/20mm from BA Steel and 71 cN/20mm from polypropylene (PP).

## Claims

1. A composition, comprising
a) a polycondensate of
a1) a dimer of a fatty alcohol and/or a dimer of a fatty amine, and
a2) a dimer of a fatty acid,
said polycondensate having a weight average molecular weight of from 2,000 to 50,000 g/mol,
and
b) a fatty acid derivative as a cross-linking agent, wherein said fatty acid derivative is obtainable by reacting
b1) a fatty acid ester comprising at least two double bonds, and
b2) a dienophile comprising at least one functional group selected from a carboxylic acid, a carboxylic acid ester and a carboxylic acid anhydride,
wherein the polycondensate and the cross-linking agent are capable of reacting with each other.

2. An adhesive obtainable by reacting
a) a polycondensate of
a1) a dimer of a fatty alcohol and/or a dimer of a fatty amine, and
a2) a dimer of a fatty acid,
said polycondensate having a weight average molecular weight of from 2,000 to 50,000 g/mol,
and
b) a fatty acid derivative as a cross-linking agent, wherein said fatty acid derivative is obtainable by reacting
b1) a fatty acid ester comprising at least two double bonds, and
b2) a dienophile comprising at least one functional group selected from a carboxylic acid, a carboxylic acid ester and a carboxylic acid anhydride.

3. The composition or adhesive of claim 1 or 2, wherein
a1) further contains a diol monomer, glycerol and/or a diamine monomer, and/or
a2) further contains a diacid monomer and/or a trimer of a fatty acid .

4. The composition or adhesive of any of claims 1 to 3, wherein the fatty acid ester is a linoleic, linolenic stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic alkyl ester, wherein the alkyl has from 1 to 24 carbon atoms, and/or mixtures thereof, or a triglyceride.

5. The composition or adhesive of claim 4, wherein the triglyceride is a natural oil selected from the group consisting of soybean oil, linseed oil, tung oil, castor oil, palm kernel oil, sunflower oil, corn oil, cottonseed oil, perilla oil, rapeseed oil, olive oil, canola oil, palm oil, coconut oil, rice bran oil, safflower oil, sesame oil, tall oil and mixtures thereof.

6. The composition or adhesive of any of claims 1 to 5, wherein the dienophile is selected from the group consisting of maleic acid, maleic anhydride, fumaric anhydride, itaconic acid, itaconic anhydride and maleate esters.

7. The composition or adhesive of any of claims 1 to 6, wherein the concentration of component a) is from 50 to 90 wt% based on the composition or adhesive.

8. The composition or adhesive of any of claims 1 to 7, wherein the concentration of component b) is from 10 to 50 wt% based on the composition or adhesive.

9. The composition or adhesive of any of claims 1 to 8, wherein the polycondensate has a glass transition temperature (Tg) of from -50°C to 0°C.

10. The adhesive of any of claims 2 to 9, wherein the adhesive has a glass transition temperature (Tg) of from -50°C to 0°C.

11. The adhesive of any of claims 2 to 10, wherein the adhesive has an adhesion force of from 20 cN/20mm to 2000 cN/20mm on steel at room temperature.

12. A method for preparing the adhesive of claims 2 to 11, comprising reacting
a) a polycondensate of
a1) a dimer of a fatty alcohol and/or a dimer of a fatty amine, and
a2) a dimer of a fatty acid,
said polycondensate having a weight average molecular weight of from 2,000 to 50,000 g/mol,
and
b) a fatty acid derivative as a cross-linking agent, wherein said fatty acid derivative is obtainable by reacting
b1) a fatty acid ester comprising at least two double bonds, and
b2) a dienophile comprising at least one functional group selected from a carboxylic acid, a carboxylic acid ester and a carboxylic acid anhydride.

13. Use of the adhesive according to any of claims 2 to 11 for laminating a sheet or a film.

## Patentansprüche

1. Zusammensetzung umfassend
a) ein Polykondensat von
a1) einem Dimer von einem Fettalkohol und/oder einem Dimer von einem Fettamin, und
a2) einem Dimer von einer Fettsäure,
wobei das Polykondensat ein gewichtsgemitteltes Molekulargewicht von 2000 bis 50000 g/mol aufweist,
und
b) ein Fettsäurederivat als ein Vernetzungsmittel, wobei das Fettsäurederivat erhältlich ist durch Umsetzen von
b1) einem Fettsäureester umfassend wenigstens zwei Doppelbindungen, und
b2) einem Dienophil umfassend wenigstens eine funktionelle Gruppe ausgewählt aus einer Carbonsäure, einem Carbonsäureester und einem Carbonsäureanhydrid,
wobei das Polykondensat und das Vernetzungsmittel imstande sind, miteinander zu reagieren.

2. Klebstoff erhältlich durch Umsetzen von
a) einem Polykondensat von
a1) einem Dimer von einem Fettalkohol und/oder einem Dimer von einem Fettamin, und
a2) einem Dimer von einer Fettsäure,
wobei das Polykondensat ein gewichtsgemitteltes Molekulargewicht von 2000 bis 50000 g/mol aufweist,
und
b) einem Fettsäurederivat als ein Vernetzungsmittel, wobei das Fettsäurederivat erhältlich ist durch Umsetzen von
b1) einem Fettsäureester umfassend wenigstens zwei Doppelbindungen, und
b2) einem Dienophil umfassend wenigstens eine funktionelle Gruppe ausgewählt aus einer Carbonsäure, einem Carbonsäureester und einem Carbonsäureanhydrid,

3. Zusammensetzung oder Klebstoff nach Anspruch 1 oder 2, wobei
a1) außerdem ein Diolmonomer, Glycerin und/oder ein Diaminmonomer enthält, und/oder
a2) außerdem ein Monomer einer zweiwertigen Säure und/oder ein Trimer von einer Fettsäure enthält.

4. Zusammensetzung oder Klebstoff nach einem der Ansprüche 1 bis 3, wobei der Fettsäureester ein Linolsäure-, Linolensäure-, Stearidonsäure-, Eicosadiensäure-, Eicosatriensäure-, Eicosatetraensäure-, Eicosapentaensäure-, Clupanodonsäure-, Docosahexaensäure-, Tetracosapentaensäure-, Nisinsäure-, Mead'sche Säure-, Arachidonsäure-, Adrensäure - oder Calendulasäurealkylester, wobei das Alkyl 1 bis 24 Kohlenstoffatome aufweist, und/oder Mischungen davon, oder ein Triglycerid ist.

5. Zusammensetzung oder Klebstoff nach Anspruch 4, wobei das Triglycerid ein natürliches Öl, ausgewählt aus der Gruppe bestehend aus Sojaöl, Leinöl, Tungöl, Rizinusöl, Palmkernöl, Sonnenblumenöl, Maisöl, Baumwollsamenöl, Perillaöl, Rapsöl, Olivenöl, Canolaöl, Palmöl, Kokosöl, Reisöl, Safloröl, Sesamöl, Tallöl und Mischungen davon, ist.

6. Zusammensetzung oder Klebstoff nach einem der Ansprüche 1 bis 5, wobei das Dienophil ausgewählt ist aus der Gruppe bestehend aus Maleinsäure, Maleinsäureanhydrid, Fumarsäureanhydrid, Itaconsäure, Itaconsäureanhydrid und Maleatestern.

7. Zusammensetzung oder Klebstoff nach einem der Ansprüche 1 bis 6, wobei die Konzentration von Komponente a) von 50 bis 90 Gew.-%, bezogen auf die Zusammensetzung oder den Klebstoff, beträgt.

8. Zusammensetzung oder Klebstoff nach einem der Ansprüche 1 bis 7, wobei die Konzentration von Komponente b) von 10 bis 50 Gew.-%, bezogen auf die Zusammensetzung oder den Klebstoff, beträgt.

9. Zusammensetzung oder Klebstoff nach einem der Ansprüche 1 bis 8, wobei das Polykondensat eine Glasübergangstemperatur (Tg) von -50°C bis 0°C aufweist.

10. Klebstoff nach einem der Ansprüche 2 bis 9, wobei der Klebstoff eine Glasübergangstemperatur (Tg) von -50°C bis 0°C aufweist.

11. Klebstoff nach einem der Ansprüche 2 bis 10, wobei der Klebstoff eine Adhäsionskraft von 20 cN/20mm bis 2000 cN/20mm an Stahl bei Raumtemperatur aufweist.

12. Verfahren zum Herstellen des Klebstoffs nach den Ansprüchen 2 bis 11, umfassend das Umsetzen von
a) einem Polykondensat von
a1) einem Dimer von einem Fettalkohol und/oder einem Dimer von einem Fettamin, und
a2) einem Dimer von einer Fettsäure,
wobei das Polykondensat ein gewichtsgemitteltes Molekulargewicht von 2000 bis 50000 g/mol aufweist,
und
b) einem Fettsäurederivat als ein Vernetzungsmittel, wobei das Fettsäurederivat erhältlich ist durch Umsetzen von
b1) einem Fettsäureester umfassend wenigstens zwei Doppelbindungen, und
b2) einem Dienophil umfassend wenigstens eine funktionelle Gruppe ausgewählt aus einer Carbonsäure, einem Carbonsäureester und einem Carbonsäureanhydrid.

13. Verwendung des Klebstoffs nach einem der Ansprüche 2 bis 11 zum Laminieren einer Folie oder eines Films.

## Revendications

1. Composition, comprenant
a) un polycondensat de
a1) un dimère d'un alcool gras et/ou un dimère d'une amine grasse, et
a2) un dimère d'un acide gras,
ledit polycondensat ayant un poids moléculaire moyen en poids de 2 000 à 50 000 g/mol,
et
b) un dérivé d'acide gras comme agent de réticulation, dans lequel ledit dérivé d'acide gras peut être obtenu par la réaction
b1) d'un ester d'acide gras comprenant au moins deux doubles liaisons, et
b2) un diénophile comprenant au moins un groupe fonctionnel sélectionné parmi un acide carboxylique, un ester d'acide carboxylique et un anhydride d'acide carboxylique,
dans lequel le polycondensat et l'agent de réticulation sont capables de réaction l'un avec l'autre.

2. Adhésif pouvant être obtenu par la réaction
a) d'un polycondensat de
a1) un dimère d'un alcool gras et/ou un dimère d'une amine grasse, et
a2) un dimère d'un acide gras,
ledit polycondensat ayant un poids moléculaire moyen en poids de 2 000 à 50 000 g/mol,
et
b) d'un dérivé d'acide gras comme agent de réticulation, dans lequel ledit dérivé d'acide gras peut être obtenu la réaction
b1) d'un ester d'acide gras comprenant au moins deux doubles liaisons, et
b2) d'un diénophile comprenant au moins un groupe fonctionnel sélectionné parmi un acide carboxylique, un ester d'acide carboxylique et un anhydride d'acide carboxylique.

3. Composition ou adhésif selon la revendication 1 ou 2, dans laquelle(dans lequel)
a1) comprend en outre un monomère diol, un glycérol et/ou un monomère diamine, et/ou
a2) contient en outre un monomère diacide et/ou un trimère d'un acide gras.

4. Composition ou adhésif selon l'une quelconque des revendications 1 à 3, dans laquelle(dans lequel) l'ester d'acide gras est un ester d'alkyle linoléique, linolénique, stéaridonique, éicosadiénoïque, éicosatriénoïque, éicosatétraénoïque, éicosapentaénoïque, clupanodonique, docosahexaénoïque, tétracosapentaénoïque, nisinique, d'acide de Mead, arachidonique, adrénique ou calendique, dans laquelle(dans lequel) l'alkyle a de 1 à 24 atome (s) de carbone, et/ou leurs mélanges, ou un triglycéride.

5. Composition ou adhésif selon la revendication 4, dans laquelle(dans lequel) le triglycéride est une huile naturelle sélectionnée parmi le groupe constitué de l'huile de soja, de l'huile de lin, de l'huile de bois de Chine, de l'huile de ricin, de l'huile de palmiste, de l'huile de tournesol, de l'huile de maïs, de l'huile de graine de coton, de l'huile de perilla, de l'huile de colza, de l'huile d'olive, de l'huile de canola, de l'huile de palme, de l'huile de coco, de l'huile de son de riz, de l'huile de carthame, de l'huile de sésame, du tallôl et de leurs mélanges.

6. Composition ou adhésif selon l'une quelconque des revendications 1 à 5, dans laquelle(dans lequel) le diénophile est sélectionné parmi le groupe constitué de l'acide maléique, de l'anhydride maléique, de l'anhydride fumarique, de l'acide itaconique, de l'anhydride itaconique et des esters maléate.

7. Composition ou adhésif selon l'une quelconque des revendications 1 à 6, dans laquelle(dans lequel) la concentration du composant a) est de 50 à 90 % en pds sur la base de la composition ou de l'adhésif.

8. Composition ou adhésif selon l'une quelconque des revendications 1 à 7, dans laquelle(dans lequel) la concentration du composant b) est de 10 à 50 % en pds sur la base de la composition ou de l'adhésif.

9. Composition ou adhésif selon l'une quelconque des revendications 1 à 8, dans laquelle(dans lequel) le polycondensat a une température de transition vitreuse (Tg) de -50°C à 0°C.

10. Adhésif selon l'une quelconque des revendications 2 à 9, où l'adhésif a une température de transition vitreuse (Tg) de -50°C à 0°C.

11. Adhésif selon l'une quelconque des revendications 2 à 10, où l'adhésif a une force d'adhésion de 20 cN/20 mm à 2 000 cN/20 mm sur l'acier à la température ambiante.

12. Procédé de préparation de l'adhésif selon les revendications 2 à 11, comprenant la réaction
a) d'un polycondensat de
a1) un dimère d'un alcool gras et/ou un dimère d'une amine grasse, et
a2) un dimère d'un acide gras,
ledit polycondensat ayant un poids moléculaire moyen en poids de 2 000 à 50 000 g/mol,
et
b) d'un dérivé d'acide gras comme agent de réticulation, dans lequel ledit dérivé d'acide gras peut être obtenu par la réaction
b1) d'un ester d'acide gras comprenant au moins deux doubles liaisons, et
b2) d'un diénophile comprenant au moins un groupe fonctionnel sélectionné parmi un acide carboxylique, un ester d'acide carboxylique et un anhydride d'acide carboxylique.

13. Utilisation de l'adhésif selon l'une quelconque des revendications 2 à 11, pour la stratification d'une feuille ou d'un film.
